# EUROPEAN PATENT SPECIFICATION

(11) **EP 2 959 799 B1**
(45) Date of publication and mention of the grant of the patent: **31.05.2017**
(21) Application number: 15171620.6
(22) Date of filing: 11.06.2015
(51) Int. Cl.: A46B 13/00, A46B 13/02, B60S 3/06

(54) **MODULAR AUTOMATIC WASHING BRUSH DEVICE**
MODULARE AUTOMATISCHE WASCHBÜRSTENVORRICHTUNG
DISPOSITIF DE BROSSES POUR LAVAGE AUTOMATIQUE MODULAIRE

(30) Priority: 12.06.2014 IT BO20140332
(43) Date of publication of application: 30.12.2015
(73) Proprietor: Morelite S.r.l., 47899 Serravalle (SM)
(72) Inventor: Bernardi Pirini, Fernandino, 46018 Ponteterra (MN) (IT)
(74) Representative: Negrini, Elena

(56) References cited:
- EP-A2- 1 939 057
- DE-A1-102005 061 612
- DE-U1-202011 005 643
- US-A- 4 658 460
- US-B1- 6 279 190

## Description

The present invention relates to the field concerning the automatic washing machine, for example automatic or semiautomatic washing machine, by means of roller brushes, particularly of the type in use for vehicles and aircraft, and relates to a modular automatic washing brush device.

There are known car washes provided with brushes supported by vertical and horizontal rollers or cylinders, for example of metal kind, placed in axial rotation by respective gear motors.
Such known brushes are generally made by a flat and flexible support, fixable to the cylindrical surface of the respective roller and provided with bristles or other projecting flexible elements that following the rotation of the roller slide along the surface of the vehicle or of other items to be cleaned; the simultaneous sprinkling of water, possibly with detergent, facilitates the cleaning action while reducing also the risk of micro abrasions onto the surface to be washed.

The bristles or flexible elements normally consist of yarns or thread of synthetic material or by terminal fringes of ribbon-shaped bands of synthetic foamed material or felts, fabrics, non-woven fabrics and the like. In particular, the bands of the known brushes can be fixed in respective concave rectangular seats bounded by long and longitudinal perimeter walls with respect to the support roll, and short transverse walls, for example formed in the support.

The latter known solution has, in addition to various advantages, also the drawback of making more difficult and slower the fixing of the bands to the support as the sides, especially the short ones of the concave seats can hinder the assembly.

Further drawback of said known solution comprising the hollow seats with the four perimetric walls consists in that it is not adapted to the fixing of the bands with lock of seam type or the like but requires more specific fixing means.
Other drawback of said known solution consists in that the transversal dimensions and fixing positions of the bands are predetermined by the respective seats and, for example, prevent the offset of the bands for a more homogeneous washing action.

Further drawback of the known solution in question consists in the fact that the thickness of the strips can be used is virtually determined by the distance between the perimeter walls long.

Another disadvantage of these known brushes consists in that the fixing of the flexible elements, such as yarns or lines and fringed bands, to the respective substrate is very complex to perform and takes a long time from trained personnel resulting very expensive and not free from errors.

Other drawback consists in that the fixing must be performed at the production site forcing to store and to transport the bulky brushes already made.

Another disadvantage of the known brushes consists in that said brushes do not allow the user to replace, on reasonable terms, the worn or damaged bristles, yarns or bands.

Other drawback consists in that the known brushes are homogeneous and do not allow to obtain a cleaning action more intense in certain areas, for example the lower portons of the vehicles.

Documents numbers US6279190B1, DE202011005643U1, US4658460A, DE102005061612A1 and EP1939057A2 relate to automatic washing brush devices.

In particular, the document US6279190 discloses a modular automatic washing brush device comprising a set of support means fixable to a respective roller covering at least partially the cylindrical surface of it, and comprising a plurality of band means each provided with fringes and with a fixing median transversal portion to the support means; the support means includes a sheet means and includes a plurality of housing means each one delimited by a pair of walls projecting from a face of the sheet means and extending along the entire longitudinal dimension of the housing means of the support means in an operative condition of the device, where said dimension is the longitudinal with respect to the axis of the corresponding roller; in said operative condition the support means is fixed to the respective roller. A plurality of such housing means of the support means houses the median transversal portions of a plurality of band means where such median transversal portions are fixed to respective housing means.

An object of the present invention is to propose an automatic washing brush device whose bands of any thickness are subject to less wear in their fixing regions.

Other object is to propose a radial orientation to the root portions of the bands of any thickness and consistency.

Further object is to propose a device provided with a cleaning action, more intense and modulated in phase of production.

Other object is to propose a device whose effectiveness and intensity of cleaning is largely independent from the diameter of the rollers on which it is installed.

Further object is to propose a device whose fringed bands are quickly and safely fixable to the flexible support and without requiring particular training or skillness of the assembly operator.

Other object is to propose a device that can be provided, without particular modifications and variations, with single-layer or multi-layer fringed bands obtained, for example by longitudinally bending or folding the bands.

Further object is to propose a device that can be assembled also in the place of installation with few simple tools while minimizing the costs of storage and transport.

The characteristics of the invention are highlighted in the following with particular reference to the accompanying drawings in which:
- Figure 1 shows a partial and a plan view of a flexible support means of the modular automatic washing brush device object of the present invention;
- Figures 2 and 3 illustrate partial views and from respective sides of the support means of Figure 1;
- Figure 4 shows a partial and plan view of two support means of Figure 1, mutually connected and provided with some fixing means;
- Figure 5 shows a partial and side view of the elements of figure 4;
- Figure 6 shows an axonometric view of the elements of figure 4;
- Figure 7 shows a partial and a plan view of a band means of the device object of the present invention and assigned to be fixed to one of the support means by one or more of the fixing means.

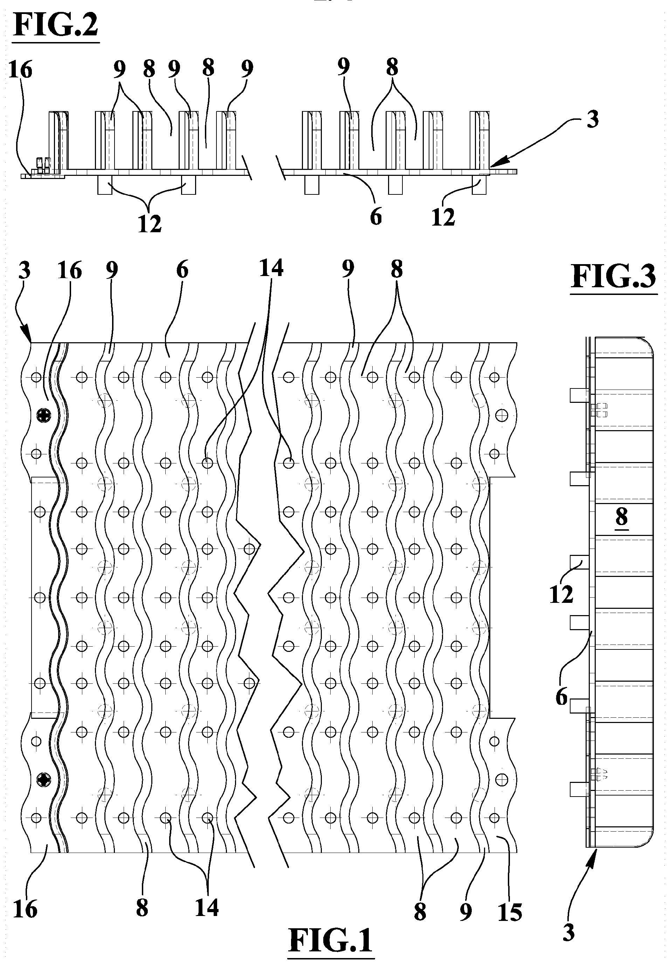

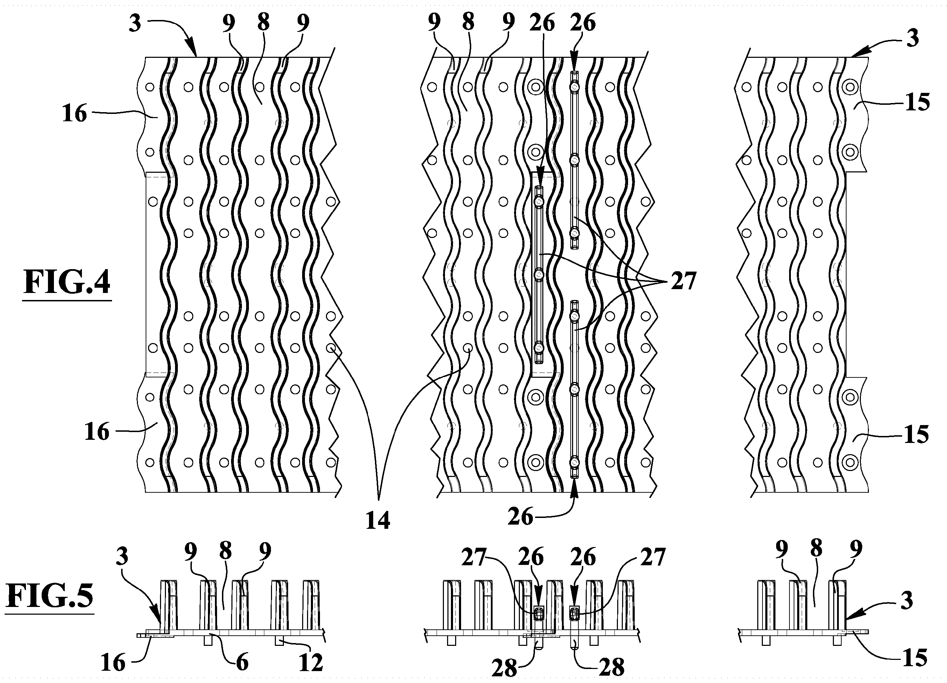

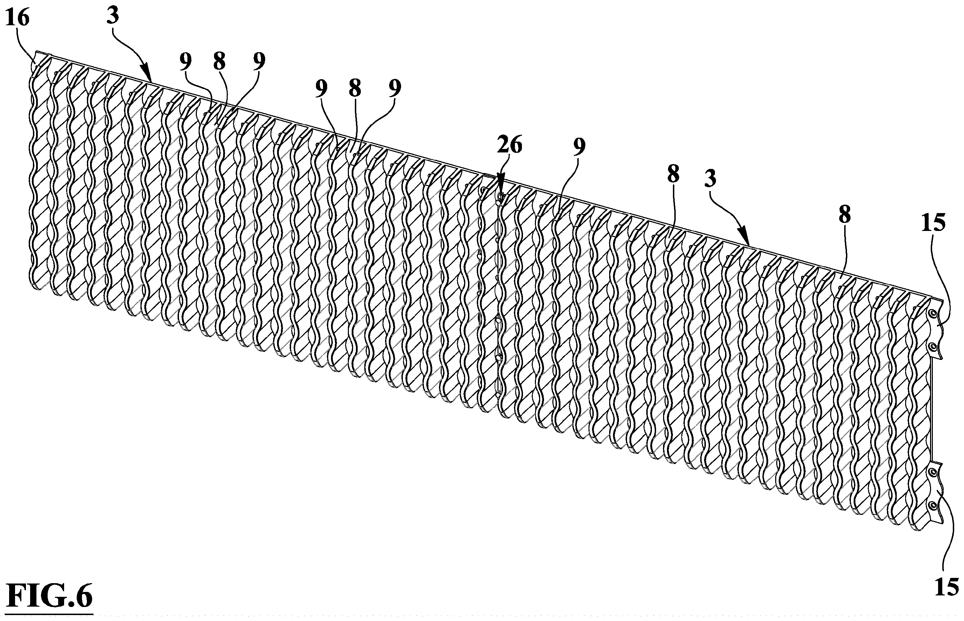

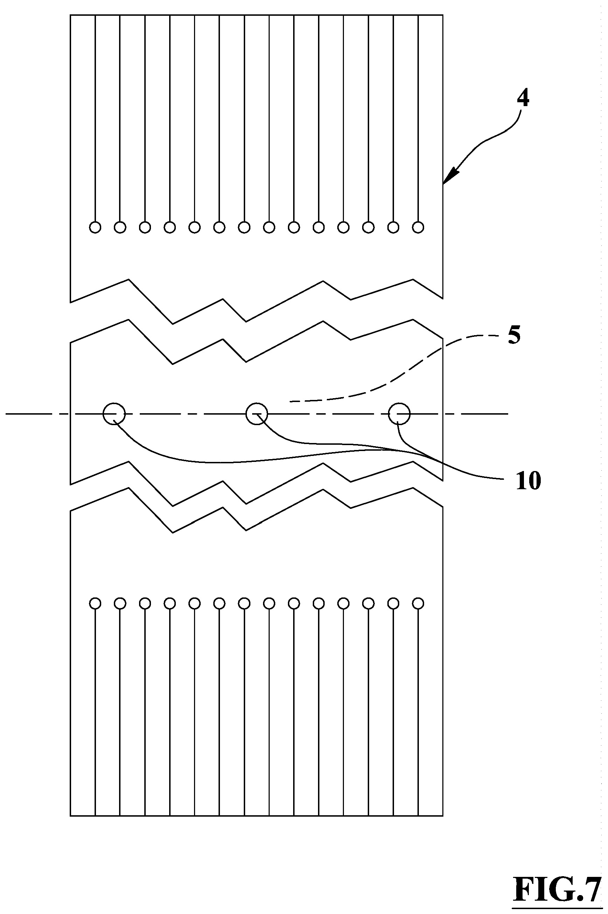

With reference to Figures 1-7, the references 3, 4 and 26 respectively indicate a support means, a band means and a fixing means of the modular automatic washing brush device, object of the present invention.

Such modular brush device comprises one or more support means 3 fixed around the side surface of a respective roller totally or at least partly covering such cylindrical side surface.

In the following, unless otherwise indicated, is done reference to an operating condition of the device in which the support means is fixed to the respective roller and the terms longitudinal and lateral refer to directions respectively parallel and perpendicular to the longitudinal axis of the roller, that coincides with the rotation axis thereof.

To each of such support means 3 is fixed the median transversal portion 5 of a plurality of band means 4 each provided with terminals fringes. In such way the roller, through the support means 3, is covered by the band means 4 whose fringes externally project and, as a result of the rotation of the roller, said fringes move away from the axis of the roller, arranging almost radially themselves.

The support means 3 comprises a flexible sheet means 6 assigned to be wound and fixed around the roller, and comprises a plurality of housing means 8 each delimited by a pair of walls 9 projecting from an outer face of a sheet means 6 with respect to the roller.

Each wall 9 is extended along the entire longitudinal dimension of the sheet means 6 of the support means 3.

A set of such housing means 8 of the support means 3 houses the median transversal portions 5 of a plurality of band means 4 where such median transversal portions 5 are fixed to the bottom of the respective housing means 8.

The walls 9 are waved with generating lines perpendicular to the sheet means 6 of the respective support means 3. The mutual distance between two adjacent walls 9 of a housing means is almost constant and corresponds to the width of the respective housing means 8.

It is important to observe that such waving or undulation of the walls 9 of the housing means 8 provides a set of benefits and advantages. The first advantage consists in that the waving of the walls 9 enables the constant contact between the latters and both sides of the bands in a wide variety of thicknesses and number of the bands folds, of realization materials of such band means 4 and of rollers radius; said contact causes two beneficial effects. The first advantageous effect consists in less wear on the zones of the bands adjacent to the edges of the walls of the housing means 8, in fact in the known devices there is an alternation of contact and detachment of the band means from the edges of the walls which then operate almost like a knife acting on the band means; vice versa the waving allows to maintain contact of the band means with the edges of the walls of the respective seat preserving such band means from friction damages and from an action of repeated contacts and detachment from the edges of the walls.

The second advantage consists in that the constant abutment of the waved walls with the sides of the band means 4 gives to the portions of the latter 4 that protrude from the housing means 8 a radial orientation. In fact, the tests carried out have shown that this radial orientation of the band means in the operating condition favorably affect the cleaning action of the band means allowing them to work in a more effective way even at low speed of rotation.

Another advantage consists in that, particularly in case of assembled band means having medium and high thicknesses, the waving of the walls induce an identical or similar waving in the root portions of the band means 4 and in the portions protruding outward the housing means so stiffening the part from which are branched off the fringes. Tests have shown that such stiffening causes a further increase in intensity and force of cleaning action; this allows to modulate the intensity of the action of the washing roller increasing said intensity proportionally to the thickness of the band means in work with respect to the distance between the waved walls.

Another advantage provided by the waving of the walls consists in that the band means have an effective and intensity of cleaning poorly dependent from the diameter of the rollers on which they are mounted.

The housing means 8 have at least two respective and distinct first and second widths and the housing means 8 having the first width are alternate with the housing means 8 having the second width. In this way the support means 3 has an alternation of wide and narrow housing means.

The face of the sheet means 6 opposite to that carrying the walls 9 bears a plurality of spacer means 12 protruding and almost opposite to the walls 9 or to a subset of them. Such spacer means 12 can be rigid, as shown in the Figures, or may be flexible, for example they 12 can be leaf spring shaped or can be tapered or conical shaped and of a length equal to or greater than those illustrated. Such configuration facilitates the mounting of the support means 3 on the rollers having different diameters since the flexion of the flexible spacer means 12 allows the adaptation of the support means 3 to the various diameters of the rollers around which it is wound.

The bottom of each housing means 8 is constituted by the portion of the sheet means 6 interposed between the walls 9 that delimit said housing means 8.
This bottom carries a set of first pass through holes 14 and the median transversal portion 5 of each band means 4 is provided with corresponding second pass through holes 10.

Such first 14 and second 10 pass through holes are engaged by fixing means for fixing the band means 4 to said housing means 8.

In particular the invention provides that the band means 4 is fixed in a housing means 8 by means of a yarn or thread seam passing through a set of first pass through holes 14 of the bottom of said housing means 8 and through a set of second pass through holes 10 of the median transversal portion 5 of said band means 4.

As an alternative to the seam and preferably, the invention provides a plurality of fixing means 26 each provided with an elongated body means 27 having at least one protruding arm means 28. In the operative condition, the body means 27 of a fixing means 26 is assigned to abut with the median transversal portion 5 of a corresponding band means 4 and each arm means 28 of such body means 27 engages a respective first through hole 14 of the bottom of said housing means 8 and a second through hole 10 of the median transversal portion 5 of said band means 4; where in said condition each arm means 28 of each fixing means 26 is locked to the support means 3.

These fixings and the conformation of the seats without transverse walls provide a great flexibility in the fixing of the band means 4 and in the width of the latter. It should be noted that this solution allows to fix the band means 4 also overhang or laterally projecting from the respective support means to place the band means even in areas of the roller not covered by the support means 3 or even beyond the ends of the rollers, for example in the articulation or connection areas between the rollers or between them and the respective supporting structure.

The first pass through holes 14, especially those adjacent to the longitudinal sides of the support means 3, can eventually and optionally be engaged by locking elements assigned to fix the support means 3 to the roller.

Each support means 3 lying on a flat plane, has a rectangular shape in plan and the two opposite longitudinal sides, assigned in the operating condition to be parallel to the axis of the roller, have complementary respective first 15 and second 16 connecting means assigned to connect together said sides or to interconnect multiple support means 3. At least one of these sides has at least one hole for a rivet, for a screw, for a nail or for the like, for fixing such side to the roller. It is provided that the fixing of a support means to the roller, for example horizontal, takes place by fixing a longitudinal side of the support means 3 to the roller with a rivet or the like engaged in the respective hole adjacent to the longitudinal side and locked to the roller; below the support means 3 is wound around the roller and the free longitudinal side of the support means 3 is joined to the corresponding side fixed through the mutual locking of the first 15 and second 16 connecting means; the latter allow, if necessary, to connect more support means 3 for rollers of large diameter.

The walls 9 protrude from the sheet means 6 of a length ranging from a third to three times of the first or second widths of the housing means 8; the thickness of these walls 9 ranges from a tenth to a third of the first or second widths of the housing means 8; the distance between two successive crests of the waving of the walls 9 ranges from the half to the double of the first or second widths of the housing means 8.
The sheet means 6 of the support means 3 is provided with a plurality of optional through seats assigned to house respective sprinklers for liquids, such as degreasing or detergents solutions, fed by respective pipes housed in longitudinal grooves or ducts of the rollers.

An advantage of the present invention is to provide an automatic washing brush device which strips of any thickness are subject to less wear in their fixing zone.

Other advantage is to provide a radial orientation to the root portions of the band means of any thickness and consistency.

Further advantage is to provide a device with a cleaning action, more intense and modulated in phase of production.

Other advantage is to provide a device whose cleaning force and intensity is largely independent from the diameter of the rollers on which it is installed.

An advantage of the present invention is to provide an automatic washing brush device able to make faster and easier the fixing of the band means to the support.

Another advantage of the present invention is to provide a brush device that is easy and quick to wound and to fix to the respective roller and also to a roller of the type with both ends supported.

Further advantage is to provide a device that allows the fixing of the band means with locking of the body with projecting arms type, with seam or with rivets or the like.

Other advantage is to provide a device which allows almost any longitudinal and transversal positioning of the band means, also staggered and laterally projecting for a washing action more homogeneous and without modifications and weakenings of the band means.

Further advantage is to provide a device which allows using the band means with different thicknesses even with housing having the same dimension and/or band means of increased width.

Another advantage is to provide a device whose fringed band means are fixable to the flexible support in quick and safe way and without requiring particular expertise or skill of the assembly operator.

Other advantage is to provide a device can be made, without particular modifications and variations, with single-layer or multi-layer fringed band means obtained, for example longitudinally bending or folding the band means.

Further advantage is to provide a device that can be assembled also in the place of installation with few simple tools while minimizing the costs of storage and transport.

Another advantage consists in that the flexible support means can easily be cut transversally to the seats in any position, without compromising the functionality or without modifying their characteristics, to totally cover rollers of any length.

## Claims

1. Modular automatic washing brush device comprising a set of flexible support means (3) fixable to a respective roller covering at least partially the cylindrical surface thereof, and comprising a plurality of band means (4) each provided with fringes and with a median transversal portion (5) assigned to be fixed to the support means (3); the flexible support means (3) comprises a flexible sheet means (6) and comprises a plurality of housing means (8) each delimited by a pair of walls (9) projecting from a face of the sheet means (6) and extending along the entire longitudinal dimension, with respect to the axis of the corresponding roller, of the support means (3) in an operative condition of the device in which the support means is fixed to the respective roller; a plurality of such housing means (8) of the support means (3) houses the median transversal portions (5) of a plurality of band means (4) where the median transversal portions (5) are fixed to the bottom of the respective housing means (8); said device being **characterized in that** the walls (9) are waved with generating lines perpendicular to the sheet means (6) of the respective support means (3); the mutual distance between two adjacent walls (9) is almost constant and corresponds to the width of the interposed housing means (8).

2. Device according to claim 1 **characterized in that** the housing means (8) have at least two respective and distinct first and second widths and that the housing means (8) having the first width are alternate with the housing means (8) having the second width.

3. Device according to any of the preceding claims **characterized in that** the face of the sheet means (6) opposite to that having the walls (9) carries a plurality of projecting spacer means (12) and almost opposed to a set of the walls (9).

4. Device according to any of the preceding claims **characterized in that** the bottom of each housing means (8) consists of the portion of the sheet means (6) interposed between the walls (9) which delimit said housing means (8) and said bottom bears a set of first pass through holes (14) engageable by fixing means engaged in second pass through holes (10) of the median transversal portion (5) of a band means (4) for the fixing of the latter (4) to said housing means (8) and/or such first pass through holes (14) are engageable by locking elements of the support means (3) to the roller.

5. Device according to any of the preceding claims **characterized in that** each support means (3) lying on a flat plane, has a rectangular plan shape and the two opposite sides, assigned in the operating condition to be parallel to the axis of the roller, having respective complementary first (15) and second (16) connection means assigned to connect together said sides, or to interconnect multiple supporting means (3) where at least one of such sides has at least one hole for at least one among rivet, screw, nail or the like, for fixing such side to the roller.

6. Device according to any of the preceding claims **characterized in that** the walls (9) protrude from the sheet means (6) of a length comprised between a third and the triple of the first or second widths of the housing means (8); the thickness of the walls (9) is comprised between a tenth and a third of the first or second widths of the housing means (8); the distance between two successive crests of the waves of the walls (9) is comprised between half and double of the first or second widths of the housing means (8).

7. Device according to claim 4 and any of the preceding claims, **characterized in that** a band means (4) is fixed in a housing means (8) by a thread seam passing through the set of first pass through holes (14) of the bottom of said housing means (8) and through the set of the second pass through holes (10) of the median transversal portion (5) of said band means (4).

8. Device according to claim 4 and any of claims 1-7 **characterized in that** it comprises a plurality of fixing means (26) each having an elongated body means (27) having at least one protruding arm means (28); in the operating condition, the body means (27) of a fixing means (26) is assigned to abut with the median transversal portion (5) of a corresponding band means (4) and each arm means (28) of such body means (27) is assigned to engage in a respective first through hole (14) of the bottom of said housing means (8) and in a second through hole (10) of the median transversal portion (5) of said band means (4); where in said condition each arm means (28) of each fixing means (26) is locked to the support means (3).

9. Device according to any of the preceding claims **characterized in that** the sheet means (6) of the support means (3) is provided with a plurality of pass through seats assigned to house respective sprinkler for liquids fed by respective pipes housed in longitudinal ducts of the rollers.

## Patentansprüche

1. Modulare automatische Waschbürstenvorrichtung, umfassend
einen Satz flexibler Unterstützungsmittel (3) der an einer entsprechenden Rolle befestigbar ist und mindestens teilweise die zylindrische Oberfläche davon bedeckt, und umfassend
eine Mehrzahl von Bandmitteln (4), die jeweils mit Fransen und mit einem mittleren Querbereich (5) bereitgestellt ist, der zugeordnet ist, um an den Unterstützungsmitteln (3) befestigt zu sein, wobei die flexiblen Unterstützungsmittel (3) ein flexibles Plattenmittel (6) und eine Mehrzahl Gehäusemittel (8) umfassen, die jeweils durch ein Paar Wände (9) begrenzt sind, die von einer Fläche des Plattenmittels (6) vorstehen und sich entlang der gesamten Längsabmessung, bezogen auf die Achse der entsprechenden Rolle, des Unterstützungsmittels (3) in einem Betriebszustand der Vorrichtung, in dem das Unterstützungsmittel an der entsprechenden Rolle befestigt ist, erstrecken, während
eine Mehrzahl von solchen Gehäusemitteln (8) der Unterstützungsmittel (3) die mittleren Querbereiche (5) von einer Mehrzahl Bandmittel (4) aufnimmt, wobei die mittleren Querbereiche (5) am Boden des entsprechenden Gehäusemittels (8) befestigt sind, und die Vorrichtung ist **dadurch gekennzeichnet, dass**
die Wände (9) wellenförmig mit erzeugende Linien senkrecht zum Plattenmittel (6) des entsprechenden Unterstützungsmittels (3) sind und
der gegenseitige Abstand zwischen zwei benachbarten Wänden (9) nahezu konstant ist und der Breite der zwischengeordneten Gehäusemittel (8) entspricht.

2. Vorrichtung gemäß Anspruch 1, **dadurch gekennzeichnet, dass** die Gehäusemittel (8) mindestens zwei entsprechende und verschiedene erste und zweite Breiten aufweisen, und dass das Gehäusemittel (8) mit der ersten Breite sich mit dem Gehäusemittel (8) mit der zweiten Breite abwechselt.

3. Vorrichtung gemäß einem der vorhergehenden Ansprüche, **dadurch gekennzeichnet, dass** die Fläche des Plattenmittels (6) gegenüber der Fläche mit den Wänden (9) eine Mehrzahl von vorstehenden Beabstandungsmitteln (12) trägt, die nahezu gegenüber einem Satz der Wände (9) angeordnet ist.

4. Vorrichtung gemäß einem der vorhergehenden Ansprüche, **dadurch gekennzeichnet, dass** der Boden von jedem Gehäusemittel (8) aus dem Bereich der Plattenmittel (6) besteht, der zwischen den Wänden (9) angeordnet ist, die das Gehäusemittel (8) begrenzen und der Boden trägt einen Satz erster Durchgangslöcher (14), die mit Befestigungsmitteln in Eingriff bringbar sind, die in zweiten Durchgangslöchern (10) des mittleren Querbereichs (5) eines Bandmittels (4) zum Befestigen des letzteren (4) am Gehäusemittel (8) angeordnet sind und/oder solche ersten Durchgangslöcher (14) sind in Eingriff bringbar durch Verriegeln von Elementen des Unterstützungsmittels (3) an der Rolle.

5. Vorrichtung gemäß einem der vorhergehenden Ansprüche, **dadurch gekennzeichnet, dass** jedes Unterstützungsmittel (3) auf einer flachen Ebene liegt, eine rechteckige ebene Form aufweist und die zwei gegenüberliegenden Seiten, die im Betriebszustand zugeordnet sind, um parallel zur Achse der Rolle angeordnet zu sein, haben entsprechende komplementäre erste (15) und zweite Verbindungsmittel (16), die zugeordnet sind, um diese Seiten miteinander zu verbinden oder um mehrere Unterstützungsmittel (3) zu verbinden, wobei mindestens eine dieser Seiten mindestens ein Loch für mindestens eines von Niet, Schraube, Nagel oder ähnlichem zum Befestigen dieser Seite an der Rolle aufweist.

6. Vorrichtung gemäß einem der vorhergehenden Ansprüche, **dadurch gekennzeichnet, dass** die Wände (9) vom Plattenmittel (6) mit einer Länge vorstehen, die zwischen einem Drittel und dem dreifachen der ersten oder zweiten Breite des Gehäusemittels (8) liegt, wobei die Dicke der Wände (9) zwischen einem Zehntel und einem Drittel der ersten oder zweiten Breite des Gehäusemittels (8) liegt und der Abstand zwischen zwei aufeinanderfolgenden Wellenkämmen der Wände (9) liegt zwischen der Hälfte und dem doppelten der ersten oder zweiten Breite des Gehäusemittels (8).

7. Vorrichtung gemäß Anspruch 4 und einem der vorhergehenden Ansprüche, **dadurch gekennzeichnet, dass** ein Bandmittel (4) in einem Gehäusemittel (8) befestigt ist mittels einer Gewindenaht, die sich durch den Satz erster Durchgangslöcher (14) des Bodens des Gehäusemittels (8) und durch den Satz zweiter Durchgangslöcher (10) des mittleren Querbereichs (5) der Bandmittel (4) erstreckt.

8. Vorrichtung gemäß Anspruch 4 und einem der Ansprüche 1-7, **dadurch gekennzeichnet, dass** sie umfasst eine Mehrzahl von Befestigungsmitteln (26) von denen jedes ein längliches Körpermittel (27) mit mindestens einem vorstehenden Armmittel (28) aufweist, wobei das Körpermittel (27) eines Befestigungsmittels (26) im Betriebszustand zugeordnet ist, um an den mittleren Querbereich (5) eines entsprechenden Bandmittels (4) anzustoßen und jedes Armmittel (28) von solch einem Körpermittel (27) ist zugeordnet, um in ein entsprechendes erstes Durchgangsloch (14) des Bodens des Gehäusemittels (8) sowie in ein zweites Durchgangsloch (10) des mittleren Querbereichs (5) des Bandmittels (4) einzugreifen, wobei in diesem Zustand jedes Armmittel (28) von jedem Befestigungsmittel (26) am Unterstützungsmittel (3) verriegelt ist.

9. Vorrichtung gemäß einem der vorhergehenden Ansprüche, **dadurch gekennzeichnet, dass** das Plattenmittel (6) des Unterstützungsmittels (3) bereitgestellt ist mit einer Mehrzahl von Durchgangssitzen, die zugeordnet sind, um entsprechende Sprinkler für Flüssigkeiten aufzunehmen, die durch entsprechende Rohre zugeführt werden, die in Längsschächten der Rolle angeordnet sind.

## Revendications

1. Dispositif de brosse de lavage automatique modulaire comprenant un ensemble de moyens de support souples (3) aptes à être fixés à un rouleau respectif, recouvrant au moins partiellement la surface cylindrique de celui-ci, et comprenant une pluralité de moyens de bande (4) munis chacun de franges et d'une partie transversale médiane (5) destinée à être fixée au moyen de support (3) ; le moyen de support souple (3) comprend un moyen de feuille souple (6) et comprend une pluralité de moyens de logement (8) délimités chacun par une paire de parois (9) se projetant à partir d'une face du moyen de feuille (6) et s'étendant le long de toute la dimension longitudinale, par rapport à l'axe du rouleau correspondant, du moyen de support (3) dans un état fonctionnel du dispositif dans lequel le moyen de support est fixé au rouleau respectif ; une pluralité de tels moyens de logement (8) du moyen de support (3) logent les parties transversales médianes (5) d'une pluralité de moyens de bande (4), les parties transversales médianes (5) étant fixées à la partie inférieure des moyens de logement (8) respectifs ; ledit dispositif étant **caractérisé par le fait que** les parois (9) sont ondulées avec des lignes génératrices perpendiculaires au moyen de feuille (6) du moyen de support (3) respectif ; la distance mutuelle entre deux parois adjacentes (9) est presque constante et correspond à la largeur du moyen de logement (8) interposé.

2. Dispositif selon la revendication 1, **caractérisé par le fait que** les moyens de logement (8) ont au moins deux première et seconde largeurs respectives et distinctes, et que les moyens de logement (8) ayant la première largeur sont alternés avec les moyens de logement (8) ayant la seconde largeur.

3. Dispositif selon l'une quelconque des revendications précédentes, **caractérisé par le fait que** la face du moyen de feuille (6) opposée à celle ayant les parois (9) porte une pluralité de moyens d'espacement en saillie (12) et presque opposés à un ensemble des parois (9).

4. Dispositif selon l'une quelconque des revendications précédentes, **caractérisé par le fait que** la partie inférieure de chaque moyen de logement (8) consiste en la partie du moyen de feuille (6) interposée entre les parois (9) qui délimitent ledit moyen de logement (8), et ladite partie inférieure porte un ensemble de premiers trous traversants (14) aptes à être engagés par des moyens de fixation engagés dans des seconds trous traversants (10) de la partie transversale médiane (5) d'un moyen de bande (4) pour la fixation de ce dernier (4) audit moyen de logement (8) et/ou de tels premiers trous traversants (14) étant aptes à être engagés par des éléments de verrouillage du moyen de support (3) au rouleau.

5. Dispositif selon l'une quelconque des revendications précédentes, **caractérisé par le fait que** chaque moyen de support (3), reposant sur un plan plat, a une forme de plan rectangulaire et les deux côtés opposés, destinés dans l'état fonctionnel à être parallèles à l'axe du rouleau, ayant des premier (15) et second (16) moyens de connexion complémentaires respectifs destinés à connecter ensemble lesdits côtés, ou à interconnecter de multiples moyens de support (3), avec au moins un de ces côtés ayant au moins un trou pour au moins un parmi un rivet, une vis, un clou ou analogue, pour fixer ce côté au rouleau.

6. Dispositif selon l'une quelconque des revendications précédentes, **caractérisé par le fait que** les parois (9) font saillie à partir du moyen de feuille (6) d'une longueur comprise entre un tiers et le triple des première ou seconde largeurs du moyen de logement (8) ; l'épaisseur des parois (9) est comprise entre un dixième et un tiers des première ou seconde largeurs du moyen de logement (8) ; la distance entre deux crêtes successives des ondes des parois (9) est comprise entre la moitié et le double des première ou seconde largeurs du moyen de logement (8).

7. Dispositif selon la revendication 4 et l'une quelconque des revendications précédentes, **caractérisé par** le fait qu'un moyen de bande (4) est fixé dans un moyen de logement (8) par une couture à fil passant à travers l'ensemble de premiers trous traversants (14) de la partie inférieure dudit moyen de logement (8) et à travers l'ensemble des seconds trous traversants (10) de la partie transversale médiane (5) dudit moyen de bande (4).

8. Dispositif selon la revendication 4 et l'une quelconque des revendications 1 à 7, **caractérisé par** le fait qu'il comprend une pluralité de moyens de fixation (26) ayant chacun un moyen de corps allongé (27) ayant au moins un moyen de bras en saillie (28) ; dans l'état fonctionnel, le moyen de corps (27) d'un moyen de fixation (26) est destiné à jouxter la partie transversale médiane (5) d'un moyen de bande correspondant (4) et chaque moyen de bras (28) d'un tel moyen de corps (27) est destiné à s'engager dans un premier trou traversant respectif (14) de la partie inférieure dudit moyen de logement (8) et dans un second trou traversant (10) de la partie transversale médiane (5) dudit moyen de bande (4) ; dans ledit état, chaque moyen de bras (28) de chaque moyen de fixation (26) est verrouillé au moyen de support (3).

9. Dispositif selon l'une quelconque des revendications précédentes, **caractérisé par le fait que** le moyen de feuille (6) du moyen de support (3) est muni d'une pluralité de sièges traversants destinés à loger un gicleur respectif pour des liquides fournis par des tuyaux respectifs logés dans des conduits longitudinaux des rouleaux.
